# EUROPEAN PATENT APPLICATION

(11) **EP 0 786 510 A1**
(43) Date of publication of application: **30.07.1997**
(21) Application number: 97200953.4
(22) Date of filing: 31.01.1991
(51) Int. Cl.: C10M 105/36, C10M 105/38, C10M 105/40, C10M 105/42, C10M 107/34, C10M 169/04, C10N 40/30

(54) **Esters as lubricants for a haloalkane refrigerant**

(30) Priority: 31.01.1990 JP 22689/90; 20.02.1990 JP 39506/90; 28.02.1990 JP 50745/90; 28.02.1990 JP 50746/90; 08.10.1990 JP 270274/90; 09.11.1990 JP 305733/90; 09.11.1990 JP 305734/90
(62) Divisional of application: 94202208.8
(71) Applicant: EXXON CHEMICAL PATENTS INC., Linden New Jersey 07036 (US)
(72) Inventor: Fukuda, Masaaki, Ohi-machi, Iruma-gun, Saitama 354 (JP); Tomizawa, Hirotaka, Ohi-machi, Iruma-gun, Saitama 354 (JP); Ohta, Mitsuo, Ohi-machi, Iruma-gun, Saitama 354 (JP); Osaka, Hideki, Ohi-machi, Iruma-gun, Saitama 354 (JP); Ogano, Satoshi, Ohi-machi, Iruma-gun, Saitama 354 (JP); Satoh, Takehisa, Ohi-machi, Iruma-gun, Saitama 354 (JP); Ashibe, Kenji, Ohi-machi, Iruma-gun, Saitama 354 (JP); Nomura, Takeshi, Ohi-machi, Iruma-gun, Saitama 354 (JP)
(74) Representative: Bawden, Peter Charles

(57) **Abstract**

An oily lubricant for mixing with the refrigerant 1,1,1,2-tetrafluoroethane (R134a) is an ester of viscosity 2-30 mm²/s at 100°C.

Suitable classes of esters are (1) polyesters of a polyol and straight or branched chain carboxylic acid (CA), (2) diesters of neopentyl glycol and a C6-9 CA, (3) complex esters of partial esters of an aliphatic polyhydric alcohol with C3-C9 fatty acids and aliphatic or aromatic di-CA, (4) C16-22 diallyl esters of aliphatic di-CA, (5) C18-26 diethyl esters of aromatic di-CA, and (6) diesters of an addition product of an alkylene oxide to a monohydric alcohol by an aliphatic di-CA.

The viscosity is adjusted by using mixture of esters or by adding a polymer; suitable viscosity for a refrigerator is 2-9 mm²/s and for a car air conditioner it is 7-30 mm²/s.

The ester should be purified to have a low acid number of 0.1-0.5 mg KOH (g), to prevent metal corrosion, whilst keeping high insulating property, and it is purified so as to be stable and to have no more than 500 ppm of moisture.

An anti-wear agent of the sulfur type is preferably added in amount of 0.01-5 w/t%, and other additives can be an antioxidant and corrosion inhibitors.

The lubricant has excellent compatibility with R134a, low hygroscopicity, high thermal stability and lubricating property.

## Description

The present invention relates to a lubricant for the refrigerant 1,1,1,2-tetrafluoroethane, which lubricant has excellent compatibility with the refrigerant, low hygroscopic property, high thermal stability and lubricating property.

R11 (CCl₃F) is used as a refrigerant for air-conditioning systems in buildings, and R12 (CCl₂F₂ ) is used for electric refrigerators for foodstuffs or as refrigerant for automotive air-conditioning systems of the rotary or reciprocating type. However, they cause destruction of ozone in the stratosphere, and alternative substances are urgently needed.

In recent years, R123 (CF ₃ CHCl ₂) has been considered as an alternative for R11, but it has some problems such as high price or toxicity. R22 (CHClF₂ ) is being considered as an alternative for R12 because of its easiness to decompose; however, the operating pressure at normal temperature is high because of its low boiling point, and pressure-resistant equipment is needed. Also, there are the problems of leaking from packings and hose components as well as problems of low electrical insulating property.

On the other hand, 1,1,1,2-tetrafluoroethane (R134a), known as an alternative for R12, does not contain chlorine which cause ozone destruction, and has passed acute and subacute toxicity tests. Thus, attention is now focused on its application.

Our EP-A-90310832 claims a refrigerant composition of R134a and a specified polyoxy propylene glycol alkyl ether of high viscosity.

At present, polyether synthetic oils of high viscosity are under development as lubricating oils. The operating temperature of a lubricating oil for a refrigerant is normally between -30 and 100^{o}C; when a polyether synthetic oil is mixed with 1,1,1,2-tetrafluoroethane refrigerant, these substances separate from each other at high temperature and there also are problems in its hygroscopic property and lubricating property.

The requirements for lubricating oils for refrigerant are: wide temperature range for compatibility with refrigerant (compatibility), i.e. no clouding at high temperature (high solvation of refrigerant to lubricating oil), high molecular polarity of lubricating oil, no separation of lubricating oil from refrigerant at low temperature (high solubility of lubricating oil to refrigerant, and low molecular weight of lubricating oil). For this reason, high compatibility with the refrigerant is very important, and it is necessary that the substance is not separated from the refrigerant at high or low temperature and that it does not react with it. If the compatibility with the refrigerant is low, seizure may occur of a moving part of the refrigerator, which becomes subject to high temperature.

The range of viscosity suitable for such lubricant differs according to each type of refrigerator, and a lubricating oil of suitable viscosity is required.

Further, the lubricant must not be corrosive to refrigerating equipment, must riot reduce its insulating property, and must have high stability to the refrigerant.

Also, the lubricant must improve the wear-resistant property of aluminium components in pistons and bearings, made of iron and aluminium, of the refrigerator.

R143a is not miscible with mineral oils.

The object of the present invention is to provide a lubricant suitable for use with 1,1,1,2-tetrafluoroethane refrigerant having a wide compatibility temperature range with the refrigerant, having no corrosive effect on refrigerating equipment, showing no reduction in insulating property, having high stability to the refrigerant and thermal stability and improving the wear-resistant property of the equipment components.

According to the present invention we provide a lubricating oil for a refrigerant which has a moisture content of 500 ppm or less comprising an ester of an organic carboxylic acid, which is miscible without separation with the refrigerant 1,1,1,2-tetrafluroethane at a temperature in the range of -10°C to 66°C, has a viscosity range of 2 to 30 mm²/s at 100°C,.

The invention also includes the resultant lubricated refrigerant compositions.

Preferably the ester is a diester of an aliphatic monohydric alcohol and an aliphatic or aromatic dicarboxylic acid.

The ester may be selected from esters of an aliphatic polyhydric alcohol and aliphatic carboxylic acid, partial esters of an aliphatic polyhydric alcohol and aliphatic carboxylic acid, or complex esters of an aliphatic polyhydric alcohol and fatty acid having 3 - 12, preferably 5 - 7, carbon atoms and an aliphatic dicarboxylic acid or aromatic dicarboxylic acid.

The ester can be of a polyoxyalkylene glycol monoether and a dicarboxylic acid of the following formula (A): 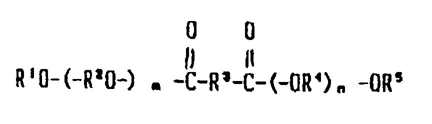 wherein R¹ and R⁵ each represents the same or different C1-8 alkyl group, R² and R⁴ each is a C2-6 alkylene group, R represents a C2-13 alkylene group or an aromatic ring, and m and n each represents an integer of 2 or more of an ester consisting of an addition derivative of a polyoxyalkylene of a trimethylolalkane, of the following general formula (B): 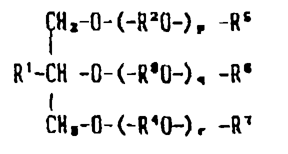 wherein R ¹ represents a C1 - 8 alkyl group, R² , R³ and R⁴ each is a C2 - 6 alkylene group, R ⁵, R⁶, and R ⁷ each is the same or different acyl group; and p, q and r each is an integer of 1 or more.

Preferably the lubricant ester has a total acid number of 0.05 mg KOH/g or less, more preferably 0.03 mg KOH/g or less, a peroxide number of 1 meq./kg or less, or more preferably 0.5 meq./kg or less, an aldehyde number of 1 mg KOH/g or less, more preferably 0.8 mg KOH/g or less, a bromine index of 10 mg/100 g or less, more preferably 5 mg/100 g or less, an ash content of 10 ppm or less, more preferably 5 ppm or less, and a moisture content of 500 ppm or less, more preferably 200 ppm or less.

A refrigerant should have a different viscosity range depending on the types of refrigerator equipment. By the present invention, a lubricating oil suitable for each type of refrigerator can be obtained either by selecting an ester with suitable viscosity range or by adjusting the viscosity by mixing an ester of different viscosity range while maintaining compatibility of the oily organic carboxylic acid ester with the refrigerant, or by adjusting the viscosity through the addition of polymers by adding a polymer selected from a polyester of a polyalkylmetacrylate, polyalkylene glycol or neopentylglycol with a carboxylic acid. As the result, a lubricating oil having high compatibility with the refrigerant and low hygroscopic property as well as good heat-resistant property can then be obtained.

The esters used can be obtained from a normal esterification reaction, purified, and its acid number, peroxide number, aldehyde number, bromine index, ash content and moisture content adjusted to the range suitable for the intended refrigeration use. The resulting lubricating oily ester shows no reduction in corrosive property and insulating property and has excellent refrigerant stability, hydrolytic stability and insulating property.

As the lubricant in this invention, the following types of esters having high molecular polarity are used:

Aliphatic carboxylic acids are used of saturated structure.
(1) First, polyesters of a polyol and straight chain or branched chain carboxylic acid can be used.
   As the polyol forming these polyesters, there are, for example, trimethylolpropane, ditrimethylolpropane, trimethylolethane, ditrimethylolethane, pentaerythritol, dipentaerythritol and tripentaerythritol. C3 - 12 acids can be used, such as propionic, butyric, valeric, hexanoic, octanoic, nonanoic, decanoic, dodecanoic, isovaleric, neopentanoic, 2-methylbutyric, 2-ethylbutyric, 2-methylpentanoic, 2-methylhexanoic, 2-ethylhexanoic, isooctanoic, isononanoic, isodecanoic, 2,2'-di-methyloctanoic or 2-butyloctanoic acid.
   Partial esters of an aliphatic polyol and straight chain or branched chain carboxylic acid can also be used.
   As aliphatic polyols, there are, for example, trimethylolpropane, ditrimethylolpropane, trimethylolethane, ditrimethyiolethane, pentaerythritol, dipentaerythritol and tripentaerythritol. Fatty acids having 3 - 9 carbon atoms can be used. It is preferably to use fatty acids such as propionic, butyric, valeric, hexanoic, heptanoic, ootanoic, nonanoic, 2-methylhexanoic, 2-ethylhexanoic, isooctanoic, isononanoic, isodecanoic, 2,2'-dimethyloctanoic or 2-butyloctanoic acid.
   As an ester of an aliphatic polyol and a straight chain or branched chain carboxylic acid, there are, for example, pentaethyritol, dipentaerythritol or tripentaerythritol, and it is preferably to use a fatty acid having 5 - 12, or more preferably 5 - 7 carbon atoms, e.g. valeric, hexanoic, heptanoic, 2-methylhexanoic, 2-ethylhexanoic, isoontanoic, isononanoic, isodecanoic, 2,2'-dimethyloctanoic on 2-butylontanoic acid. A mixture of oily esters can improve compatibility with refrigerant at low temperature.
   Partial enters can be obtained through reaction by adequately adjusting the reacting mol number of the aliphatic polyhydric alcohol and fatty acid.
(2) Diesters of neopentyl glycol as aliphatic polyol and a straight chain or branched chain C6 - 9 carboxylic acid, e.g. hexanoic, heptanoic, octanoic, nonanoic, 2-ethylbutylric, 2-methylhexanoic, 2-ethylhexanoic, isooctanoic or isononanoic acid can be used.
(3) Complex enters of partial enters of an aliphatic polyhydric alcohol with straight chain or branched C3 - 9 fatty acids and straight chain or branched chain aliphatic or aromatic dicarboxylic acids can be used.
   As an aliphatic polyol, trimethylolpropane, trimethylolpropane, trimethylolethane or pentaerythritol can be used.
   As C3 - 12 aliphatic carboxylic acid, propionic, butyric, isobutyric, valeric, hexanoic, heptanoic, octanoic, nonanoic, decanoic, dodecanoic, 2-methylhexanoic, 2-ethylhexanoic, inooctanoic, isononanoic, isodecanoic, 2,2'dimethyloctanoic or 2-butylontanoic acid can be used.
   In such complex esters, it is preferably to use a C5 - 7 aliphatic carboxylic acid or more preferably, a C5 - 6 aliphatic carboxylic acid. The ester oil thus obtained can improve the compatibility with the refrigerant at low temperature.
   As aliphatic carboxylic acid, valeric, hexanoic, isovaleric, 2-methylbutyric or 2-ethylbutyric acid, or a mixture thereof can be used. A mixture of such acids having 5 and 6 carbon atoms, mixed in a weight ratio of 10:90 to 90:10, can be preferably used.
   An aliphatic dicaboxylic acid to be used for esterification with a polyhydric alcohol together with aliphatic carboxylic acid, there are succinic acid, adipic acid, pimelic acid, suberic acid, azelaic acid, sebacic acid, undecanoic dicarboxylic acid, dodecanoic dicarboxylic acid, tridecanoic dicarboxylic acid, carboxyoctadecanoic acid, carboxymethyloctadecanoic acid and docosanoic dicarboxylic acid. As aromatic dicarboxylic acid, there are phthalic or isophthalic acid, trimellitic acid as an aromatic tricarboxylic acid, and pyromellitic acid an aromatic tetracarboxylic acid.
   The molar ratio of the aliphatic monocarboxylic acid and aliphatic acid or aromatic dicarboxylic acid, aromatic tricarboxylic acid and aromatic tetracarboxylic acid is preferably 6:1. In the esterification reaction, the ratio of total molar quantity of aliphatic monocarboxylic acid and aliphatic dicarboxylic acid or aromatic dicarboxylic acid to the quantity of aliphatic polyhydric alcohol is preferably 7:1.
   The ester may be prepared through reaction of partially esterified substance with aliphatic monocarboxylic acid after the esterified substance is obtained by the reaction of a polyhydric alochol with aliphatic dicarboxylic acid or aromatic dicarboxylic acid or mixed acids in the predetermined ratio, or the order of reaction of the carboxylic acids may be reversed.
(4) Dialkyl enters (C16 - 22) of straight chain or branched chain aliphatic dicarboxylic acid may be used.
   As the aliphatic dicarboxylic acid, there are succinic acid, glutaric acid, adipic acid, pimelic acid, suberic acid, azelaic acid, sebacic acid, undenanoic dicarboxylic acid, dodecanoic dicarboxylic acid, tridecanoic dicarboxylic acid, carboxyoctadecanoic acid, carboxymetyloctadecanoic acid, and docosanoic diacid, or an acid substance having the same property an these may be used. It is preferable to use an aliphatic dicarboxylic acid such as succinic acid, adipic acid, sebacic acid, undecanoic diacid, dodecanoic diacid, carboxyoctadecanoic acid or carboxymethyloctadecanoic acid.
   As the alcohol components, there are C5-8 alcohols e.g. amyl alcohol, hexyl alcohol, heptyl alcohol and octyl alcohol as well as isomers of these substances, more preferably, isoamyl, isohexyl and octyl alcohol.
   Suitable specific enters are dioctyl adipate, diisoheptyl adipate, dihexyl sebacate and diheptyl succinate.
(5) Dialkyl enters (having 18 - 26 carbons) of aromatic dicarboxylic acid can also be used.
   As aromatic dicarboxylic acid, there are phthalic acid, isophthalic acid and equivalents. As alcohol component in a dialkylester, a C5 - 8 alcohol such as amyl alcohol, hexyl alcohol, heptyl alcohol, octyl alcohol and isomers of these substances can be used. It is preferable to use isoamyl, isoheptyl or octyl alcohol. Such aromatic diesters include dioctyl phthalate, diisoheptyl phthalate and diisoamyl phthalate.
(6) As alcohol components, addition products of an alkylene oxide of a monohydric alcohol selected from methanol, ethanol, propanol or butanol, or isomers of these substances, or addition products of alkylene oxide of trihydric alcohol such an glycerine or trimethylolpropane can be used. Those addition products of 1 - 10 mols, or more preferably, 1 - 6 mols of alkylene oxide selected from ethylene oxide, propylene oxide, butylene oxide or amylene oxide and isomers of these substances are used.

An esters, there are diesters obtained by esterification of addition products of an alkylene oxide to a monohydric alcohol by an aliphatic dicarboxylic acid such as adipic acid, pimelic acid, pimelic acid, suberic acid, azelaic acid, sebacic acid, undecane dicarboxylic acid, dodecane dicarboxylic acid, carboxyontadecane acid, carboxymethyloctadecane acid or docosane dicaroxylic acid or by an aromatic dicarboxylic acid such as phthalic acid.

Also, esters obtained through esterification of addition products of 1 - 10 mols of alkylene oxide of polyhydric alcohol such, as glycerine, trimethylolpropane, etc. by straight chain or branched chain C3 - 12 aliphatic carboxylic acids can be used, e.g. propionic, butyric, valeric, hexanoic heptanoic, octanoic, nonanoic, decanoic, dodecanoic, 2-methylhexanoic, 2-ethylhexanoic, isooctanoic, isononanoic, isodecanoic, 2,2'-dimethyloctanoic or 2-butyloctanoic acid.

As the fatty acid in the above esters, a straight chain or branched chain aliphatic carboxylic acid can be used. It is preferable to use a branched chain aliphatic carboxylic acid because of high hydrolytic stability and good compatibility with a hermetic coil.

We now describe the methods to purify the esters.

Esters can be obtained by esterification reaction, e.g. by esterification of alcohols and aliphatic carboxylic acid in the presence of an acid catalyst, e.g. phosphoric acid. The esters obtained by such method have a total acid number of 0.1 - 0.5 mg KOH/g, peroxide number of 0.1 - 5 meq./kg, aldehyde number of 0.1 - 5 mg KOH/g, bromine index 1 - 100 mg/100 g, ash content 5 - 50 ppm, and moisture content 300 - 1000 ppm.

However, if the total acid number in the ester for use in a refrigerator is high, metal components may be corroded, and the function as the lubricating oil for the refrigerator is decreased through hydrolysis of the lubricating oil itself. Also, the lubricant must have a high insulating property because it is placed in the motor section of the refrigerator. Thus, it is preferable that the lubricating oil for refrigerator has a total acid number of 0.05 mg KOH/g or less.

Further, to increase the refrigerant stability, it is necessary to reduce the peroxide number, aldehyde number and bromine index to lower values, to reduce ash content to reduce sludge and the like, and to reduce the water content in order to maintain hydrolytic stability and insulating property.

For this purpose, it is necessary to purify the above esters obtained by normal esterification reaction and to adjust the above indices for properties of the ester to a range well suitable for a lubricant oil for a refrigerant.

It is preferable to purify an organic carboxylic acid ester through contact processing with e.g. silica gel, activated alumina, activated carbon or a zeolite. The contact condition in this case may be determined according to each case, and it is preferable to perform the processing at 100°C or less.

Normally, the viscosity at 100°C of the lubricant for use in a refrigerator is 2 - 9 mm²/s, or more preferably 3 - 7 mm²/s, and for use in a car air-conditioner is preferably 7 - 30 mm²/s. In a car air-conditioner, the viscosity range of the oily ester is preferably 7 - 15 mm²/s, or more preferably 8 - 11 mm²/s for the reciprocating type compressor, and 15 - 30 mm²/s or more preferably 20 -27 mm²/s for rotary type compressor.

The viscosity range of the lubricants according to the present invention is thus 2 - 30 mm²/s. A viscosity less than 2 mm²/s is not desirable because of low refrigerant viscosity, poor lubricating and sealing properties, and low thermal stability; more than 30 mm²/s is not desirable because the compatibility of the ester with the refrigerant is decreased.

Even when it is within the above range, the operating viscosity range differs according to each equipment used. If it exceeds 9 mm²/s in case of a refrigerator, the friction loss at the sliding portion may be increased.

Further, if it is less than 7 mm²/s in case of a car air-conditioner of the reciprocating type, a problem arises with lubricating property, and if it exceeds 15 mm²/s, a problem arises of increased friction loss on the sliding portion. In case of a rotary type air-conditioner, a problem arises with sealing property if it is less than 15 mm²/s, and the problem of compatibility with refrigerant if it is more than 30 mm²/s.

Esters may be used alone, or the above desired esters may be suitably combined in order to adjust the viscosity range according to each application.

For example, when viscosity is high in case of complex type esters of type (13) above, the viscosity range can be adjusted for each application by adding an ester of an aliphatic polyhydric alcohol with an aliphatic carboxylic acid having 3 - 9 carbons while maintaining compatibility with the refrigerant. Such esters preferably have a viscosity of 6 mm²/s or less at 100°C.

To suitably adjust the viscosity of the lubricant, polymers for maintaining the compatibility with refrigerant may be added, in any suitable proportion, to the esters. It is preferable that such polymer has a viscosity of 10 mm²/s or more at 100°C.

As a polymer, a polyester of an aliphatic dicarboxylic acid with a polyalkylmethacrylate (e.g. containing a C4 - 8 alkyl group), polyalkylene glycol (e.g. copolymer comprising polypropylene glycol or polyethyleneglycol and polypropyleneglycol, or copolymer containing polypropyleneglycol and polytetramethyleneglycol), or neopentylglycol and represented by the following formula may be used. 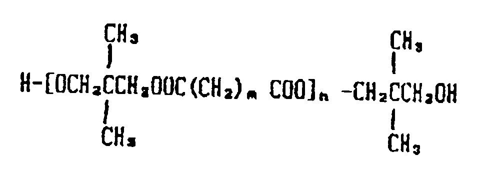 wherein m represents an integer of 1 - 20, and n an integer of 1 - 10.

Provided that the desired viscosity is obtained, normally, it is within the range between 1 wt% and 90 wt%.

To reduce wear on iron/aluminium contacts in the refrigerator, it is preferable to add to the lubricant one or more sulfur type anti-wear agents such as of the general formula:

(RO)₃ P = S

wherein each R represents the same or different alkyl group, allyl group or phenyl group. Suitable types of the sulfur type anti-wear agent are a trialkylphosphorothionate, triphenylphosphorothionate and alkyldiallylphosphorothionate.

Sulfides such as diphenyl sulfide, diphenyl isdulfide, di-n-butyl sulfide, di-n-butyl disulfide, di-tert-dodecyl disulfide or di-tert-dodecyl trisulfide, a sulfurized oil such as sulfurized sperm oil or sulfurized dipentene, dithiocarbonates such as an xanthate, or a zinc thiophosphate type anti-wear agent such as a primary or secondary alkyl zinc thiophosphate, alkyl-allyl zinc thiophosphate or allyl zinc thiophosphate can be used.

It is preferable to use such anti-wear agent in the following ratio to the ester oil: 0.01 - 5 wt %, more preferably, 0.1 - 3 wt %.

As antioxidant, an amine type antioxidant such as dioctyldiphenylamine, phenyl-α-naphthylamine, alkyldiphenylamine or N-nitrosodiphenylamine, phenol type antioxidant such as 2,6-di-t-butylparacresol, 4,4'-methylene-bis-(2-6-di-butylphenol), 2,6-di-t-butyl-α-dimethylamineparacresol or 2,6-di-t-butylphenol, phosphorus type antioxidant such as tris-(2,4-di-t-butylphenyl)phosphite, tris-nonylphenyl phosphite or triphenyl phosphite can be used. It is preferable to use such antioxidant in the following ratio to the ester: 0.01 - 10 wt %, or more preferably 0.01 - 1.0 wt%.

Suitable corrosion inhibitors are isostearate, n-octadecyl ammonium stearate, duomin T-diolate, lead naphthenate, sorbitan oleate, pentaerythrite oleate, oleyl sarcosine, alkyl succinic acid, alkenyl succinic acid and derivatives of these substances. The preferable mixing ratio to the ester oil is 0.001 - 1.0 wt %, or more preferably 0.01 - 0.5 wt %.

As defoaming agent, a silicone can be used. The preferable mixing ratio to the ester oil is: 0.0001 - 0.003 wt %, or more preferably 0.0001 - 0.001 wt %.

As metal deactivator, benzotriazole, benzotriazole derivative, thiadiazole, thiadiazole derivative, triazole, triazole derivative or dithiocarbamate, may be used, preferably in the following ratio to the ester oil: 0.01 - 10 wt %, or more preferably 0.01 - 1.0 wt %.

Further, as rust preventive, succinic acid, succinic acid ester, oleic acid tallow amide, barium sulfonate or calcium sulfonate may be used. These substances are used in the following ratio: 0.01 - 10 wt %, or more preferably 0.01 - 1.0 wt %.

The invention will be illustrated by the following examples. First, description is given of the methods used to evaluate the refrigerant oils as used in the Examples.

### Compatibility test method

A specimen of lubricant oil and the refrigerant (1,1,1,2-tetrafluoroethane) are placed in a glass tube in the ratio of specimen oil to refrigerant of 3 and 10 wt % to make the toal volume to 2 ml, and these are mixed together. The glass tube is placed in a constant-temperature chamber provided with heating and cooling devices, and the separation temperature of specimen oil and refrigerant is measured.

### Hygroscopic property test method

In a dessicator containing water, a specimen of lubricant oil is placed, and its hygroscopic property is measured over time at room temperature and at 95% humidity.

### Example 1

The specimen oil 1 is an ester of dioctyl adipate, and the specimen oil 2 is an ester of ,pentaerythritol with straight chain C₅ - C₉ acid. The straight chain C₅ - C₉ acids consist of C₅ acid component by 30 wt %, C₇ acid component by 40 wt % and C₉ acid component by 30 wt %. Pentaerythritol and straight C₅ - C₉ acid are reacted with each other at the mol ratio of 1:4.

The specimen oil 3 is an ester of dipentaerythritol with straight chain C₅ - C₇ acid, and straight chain C₅ - C₇ acid consists of C₅ acid component by 30 wt W, C₆ and component by 60 wt %, and C₇ acid component by 10 wt %. Dipentaerythritol and straight chain C₅ - C₇ fatty acids are reacted with each other at mol ratio of 1:6.

The specimen oil 4 is an ester obtained by reaction of dihexyl succinate and the specimen oil 5 is an ester obtained by reaction of dipentaerythritol with oleic acid by mole ratio of 1:6.

Table 1 summarizes the results of the evaluation of performance characteristics as refrigerator oil when various types of ester oils are added to 1,1,1,2-tetrafluorethane.

**Table 1**

| | Specimen oil 1 | Specimen oil 2 | Specimen oil 3 | Specimen oil 4 | Specimen oil 5 |
|---|---|---|---|---|---|
| Viscosity (mm²/s) at 100°C | 2.4 | 5.0 | 10.5 | 1.0 | 16.5 |

| Compatibility with refrigerant | | | | | |
|---|---|---|---|---|---|
| Two-phase separation temperature at high temperature | 110°C or more | 95°C | 100°C | 110°C or more | Separated at room temperature |
| . Oil component ratio 10 wt % | | | | | |
| . Oil component ratio 3 wt % | 110°C or more | 100°C | 105°C | 110°C or more | Separated at room temperature |
| Two-phase separation temperature at low temperature | -40°C or less | -20°C | -40°C or less | -40°C or less | Separated at room temperature |
| . Oil component ratio 10 wt % | | | | | |

| Hygroscopic property (moisture %) | | | | | |
|---|---|---|---|---|---|
| 7 days | 0.04 | 0.06 | 0.09 | 0.02 | - |
| 14 days | 0.08 | 0.10 | 0.17 | 0.05 | - |
| 21 days | 0.13 | 0.16 | 0.27 | 0.10 | - |
| 28 days | 0.17 | 0.22 | 0.32 | 0.13 | - |
| Thermal stability 140°C x 24 hr. Evaporation loss | Low | Low | Low | High | Low |

As Table 1 shows, the specimen oils 1 - 3 have good compatiblity with refrigerant and low hygroscopic property, and these oils can be used as base oil for the lubricating oil for refrigerator. The specimen oil 4 having the viscosity of less than 2 mm²/s is thermally unstable, while the specimen oil 5 has high thermal stability but its compatibility is low.

### Example 2

The specimen 6 is an ester of dipentaerythritol with aliphatic C₅ - C₆ acids, and aliphatic C₅ - C₆ acid contains 30 wt % C₅ acid components and 70 wt % C₆ acid component. Dipentaerythritol and the aliphatic C₅ - C₆ acids are reacted with each other at a mol ratio of 1:6.

The specimen oil 7 is an ester of pentaerythritol with aliphatic C₅ - C₆ acids. The aliphatic C₅ - C₆ acids contain 50 wt % each of C₅ acid component and C₆ acid component. Pentaerythritol and the aliphatic C₅ - C₆ acid are reacted with each other at a mol ratio of 1:4.

The specimen oil 8 is an ester of pentaerythritol with aliphatic C₅ - C₇ fatty acid, and aliphatic C₅ - C₇ fatty acid contains 30 wt %, C₅ acid component, 40 wt % C₆ acid component and 30 wt % C₇ acid component. Pentaerythritol and aliphatic C₅ - C₇ acid are reacted with each other at a mol ratio of 1:4.

The specimen oil 9 is an ester of tripentaerythritol with aliphatic C₅ - C₆ acid, and the aliphatic C₅ - C₆ acid contains C₅ acid component by 40 wt % and C₆ acid component by 60 wt %. Tripentaerythritol and aliphatic C₅ - C₆ acid are reacted with each other at mol ratio of 1:8.

The specimen oil 10 is an ester of pentaerythriotl and aliphatic C₇ - C₉ acid, and the aliphatic C₇ - C₉ acid contains 50 wt % each of C₇ and C₉ acid component. Pentaerythritol and the aliphatic C₇ - C₉ fatty acid are reacted with each other at a mol ratio of 1:4.

The specimen oil 11 is an ester of mixed alcohol of trimethylolpropane and pentaerythritol with aliphatic C₅ acid. The mixing ratio of trimethylolpropane and pentaerythritol is 50:50 (wt %).

The specimen oil 12 is an ester of pentaerythritol and aliphatic C₅ - C₆ acid, and the aliphatic C₅ - C₆ acid contains 40 wt % C₅ acid component, and 60 wt % C₆ acid component. Pentaerythritol and the aliphatic C₅ - C₆ acid are reacted with each other at a mol ratio of 1:4.

The specimen oil 13 is an ester of trimethylolpropane and aliphatic C₈ - C₁₂ acid, and the trimethylolpropane and aliphatic C₈ - C₁₂ acid are reacted with each other at mol ratio of 1:3.

The specimen oil 14 is an ester of trimethylolpropane and aliphatic carboxylic acid having carbons of C₈ or more, and trimethylolpropane and aliphatic carboxylic acid having carbons of C₈ or more are reacted with each other at mol ratio of 1:3.

The specimen oil 15 is a complex ester of trimethylolpropane and aliphatic C₈ - C₁₂ acid + adipic acid.

The specimen oil 16 is an ester having the same constitutents as the above specimen oil 15, but the mixing ratio of aliphatic C₈ - C₁₂ acid and adipic acid is different.

On these specimen oils, viscosity at 100°C (mm²/s) and refrigerant compatibility (two-phase separation temperature) at high and low temperatures at oil component ratio 10% were measured. The results are shown in Table 2.

**Table 2**

| | Viscosity * | Viscosity index | Refrigerant compatibility (°C) | |
|---|---|---|---|---|
| | | | Low temperature | High temperature |
| Specimen oil 6 | 10.0 | 124 | -50°C or less | 97°C |
| Specimen oil 7 | 3.8 | 120 | -50°C or less | 110°C or more |
| Specimen oil 8 | 4.0 | 126 | -30°C | 100°C |
| Specimen oil 9 | 20.0 | 112 | -50°C or less | 90°C or more |
| Specimen oil 10 | 5.8 | 125 | +10°C | 80°C |
| Specimen oil 11 | 3.5 | 101 | -50°C or less | 110°C or more |
| Specimen oil 12 | 4.2 | 106 | -50°C or less | 110°C or more |
| Specimen oil 13 | 4.4 | 140 | Separated at room temperature | |
| Specimen oil 14 | 9.2 | 189 | Separated at room temperature | |
| Specimen oil 15 | 11.2 | 136 | Separated at room temperature | |
| Specimen oil 16 | 29.5 | - | Separated at room temperature | |

| | | | | |
|---|---|---|---|---|
| * mm²/s (100°C) | | | | |

As Table 2 shows, the specimen oils 6 - 12 have high compatibility with refrigerant at high temperature as well as low temperature, and these oils can be used as base oil for the lubricating oil for refrigerator, but the specimen oils 13 - 16 have low refrigerant compatibility.

### Example 3

The following table shows the specimen oils of Examples 1 and 2 used in combination.

**Table 3**

| Specimen oils | Viscosity * | Mixing ratio (wt %) | Refrigerant compatibility (°C) | |
|---|---|---|---|---|
| | | | Low temperature | High temperature |
| Combination of specimen oils 10 and 6 | 9.5 | 10:90 | -40°C or less | 90°C or more |
| Combination of specimen oils 2, 12 and 6 | 6.0 | 35:35:30 | -50°C or less | 110°C or more |

| | | | | |
|---|---|---|---|---|
| * mm²/s (100°C) | | | | |

Thus, the specimen oils 10 and 2 have low refrigerant compatibility at low temperature by themselves, whereas refrigerant compatibility is increased and viscosity can be adjusted if they are used with the specimen oils 6 and 12 as base oils.

### Example 4

The specimen oils 17, 18 and 19 are prepared by adding polyalkylene glycol having viscosity of 13.0 mm²/s (100°C) to the specimen oil 2 in varying quantities, and refrigerant compatibility and hygroscopic property were measured. The results are given in Table 4.

**Table 4**

| Specimen oil | Specimen oil 17 | Specimen oil 18 | Specimen oil 19 |
|---|---|---|---|
| Polymer adding quantity (wt %) | 25 | 50 | 75 |
| Viscosity after blending (1) | 6.5 | 8.4 | 10.5 |

| Compatibility with refrigerant | | | |
|---|---|---|---|
| Two-phase separation temperature at high temperature | 85°C | 76°C | 66°C |
| . Oil component ratio 10 wt % | | | |
| . Oil component ratio 3 wt % | 91°C | 80°C | 71°C |
| Two-phase separation temperature at low temperature | -40°C | -40°C or less | -40°C or less |
| . Oil component ratio 10 wt % | | | |

| Hygroscopic property (moisture %) | | | |
|---|---|---|---|
| 7 days | 0.3 | 0.6 | 1.0 |
| 14 days | 0.4 | 0.8 | 1.2 |
| 21 days | 0.4 | 0.9 | 1.4 |
| 28 days | 0.5 | 1.1 | 1.5 |

| | | | |
|---|---|---|---|
| (1) mm²/s (100°C) | | | |

The specimen oils 17 - 29 have high compatibility with refrigerant and low hygroscopic property.

### Example 5

Sealed tube test at high temperature was performed on the compatible substance, which was obtained by mixing the specimen oil 2 of the Example 1 with 1,1,1,2-tetrafluoroethane refrigerant.

The test method was as follows: First, 1 g of specimen oil 2, 1 g of 1,1,1,2-tetrafluoroethane as well as one piece each of iron, copper and aluminum (1.7 mm in diameter and 40 mm in length) were sealed in a glass tube. Then, it was heated at 175°C for 14 days (336 hours). At the completion of the test, the degree of discoloration of the specimen oil was measured, and the conditions of the metal test pieces were examined.

A similar test was performed on the compatible substance obtained by mixing the specimen oil 2 with the following additives and further with 1,1,1,2-tetrafluoroethane refrigerant. Also SRV vibration friction wearing test was performed to evaluate the lubricating property under the conditions as shown below.

As the additives, a metal deactivator benzotriazole (BTA) was added to the specimen oil 2 by 0.1 wt %, antioxidant 2,6-di-t-butylparacresol (DBPC) by 0.5 wt %, or anti-wear agent tricresyl phosphate (TCP) by 0.5 wt %.

The conditions for SRV vibration friction wearing test:
- Test piece: : Steel ball of 10 mm in dia (SUJ2)/ aluminum plate (A390)
- Oil temperature: : 140°C
- Stroke: : 1.25 mm
- Load: : 50 N
- Frequency: : 15 Hz
- Duration: : 30 minutes

The results of the test are shown in Table 5A and Table 5B.

**Table 5A**

| To specimen oil 2 | | Color of specimen oil | | External appearance of test piece | | |
|---|---|---|---|---|---|---|
| Additives | Added q'ty | Before test | After test | Iron | Copper | Aluminum |
| - | - | 0.5 | L1.0 | Good | Good | Good |
| BTA | 0.1 | 0.5 | L1.0 | Good | Good | Good |
| DBPC | 0.5 | 0.5 | L1.0 | Good | Good | Good |
| TCP | 0.5 | 0.5 | L1.0 | Good | Good | Good |
| DBPC | 0.3 | 0.5 | L1.0 | Good | Good | Good |
| TCP | 0.3 | 0.5 | L1.0 | Good | Good | Good |
| Added quantity is in wt %. | | | | | | |

**Table 5B**

| | Composition (wt %) | Lubricating property (Wear scar m/m) |
|---|---|---|
| Specimen oil 2 | 100 | 1.10 |
| Specimen oil 2 | 98.9 | 0.98 |
| +BTA | 0.1 | |
| +DBPC | 0.5 | |
| +TCP | 0.5 | |
| Specimen oil 2 | 99.4 | 1.00 |
| +DBPC | 0.3 | |
| +TCP | 0.3 | |

The lubricants of this invention showed no deterioration in color, and less sludge was generated during the test. The external appearance of the test pieces was satisfactory after the test, and it was found that the lubricants had excellent chemical and thermal stability as well as high lubricating property.

Next, exemplification is given for the case where the complex of the above type (3) is used as ester.

### Example 6

Description is given first of the specimen oils to be used in this example.

The specimen oil 20 is obtained as follows:
Pentaerythritol was used as polyol, and succinic acid was used as dicarboxylic acid. The monocarboxylic acid was aliphatic C₅ - C₆ acid having the molar ratio of C₅ acid to C₆ acid components of 1:1. To 2 mols of pentaerythritol, 1 mol of succinic acid was given to react, and 6 mols of monocarboxylic acid was reacted to obtain this specimen oil.

The specimen oil 21 is obtained as follows:
Pentaerythritol was used as polyol, and adipic acid as dicarboxylic acid. The monocarboxylic acid was aliphatic C₅ - C₆ acid having a molar ratio of C₅ to C₆ acid components of 1:1. To 2 mols of pentaerythritol, 1 mol of adipic acid was added to react, and 6 mols of monocarboxylic acid was further reacted with it.

The specimen oil 22 is obtained as follows:
Pantaerythritol was used as polyol. The monocarboxylic acid was aliphatic C₅ - C₆ acid of molar ratio of C₅ acid to C₆ acid components of 1:1, and this was used to perform esterification reaction for the preparation of an ester for viscosity adjustment. The specimen oil 22 was obtained by mixing 60 wt % of this ester for viscosity adjustment with 40 wt % of the above specimen oil 20.

The specimen oil 23 was obtained by mixing 80 wt % of the ester for viscosity adjustment used for the above specimen oil 22 with 20 wt % of the above specimen oil 21.

On these specimen oils of the present invention, the viscosity at 40°C and 100°C (mm²/s) and refrigerant compatibility (two-phase separation temperature) at high and low temperatures and at oil component ratio 15% were measured. The results are given in Table 7.

The properties of the above ester oil for viscosity adjustment are also given as the specimen oil 25.

**Table 6**

| Specimen oil No. | Viscosity | | Viscosity index | Refrigerant compatibility | |
|---|---|---|---|---|---|
| | 40°C | 100°C | | Low temperature | High temperature |
| Specimen oil 20 | 84.14 | 12.52 | 146 | -40°C | 85°C |
| Specimen oil 21 | 86.62 | 13.03 | 150 | -40°C | 80°C |
| Specimen oil 22 | 44.47 | 7.494 | 134 | -50°C or less | 89°C |
| Specimen oil 23 | 58.47 | 9.510 | 146 | -40°C | 83°C |
| Specimen oil 24 | 16.30 | 3.751 | 120 | -50°C or less | 110°C or more |

It is evident from the above table that the specimen oils according to the present invention have excellent compatibility at both high and low temperatures.

On the specimen oil 23 in the above Example 5, a sealed tube test was performed by the same procedure as in the Example 4.

For this specimen oil, the results similar to those of the Example 4 were obtained.

Next, exemplification is given of the use of the type (6) esters in the lubricating oil for refrigerator.

### Example 7

The specimen oil 25 is a diester synthesized from polyoxypropyleneglycol monoether (manufactured by Sanyo Chemical Co., Ltd.; LB-65; molecular weight 340) and adipic acid.

The specimen oil 26 is a triester synthesized from trimethylolpropanepropyleneoxide addition product (Sanyo Chemical Co., Ltd.; TP-400; molecular weight 400) and valeric acid.

The specimen oil 27 is a dihexyl succinate for comparison.

The specimen oil 28 is a commercial complex ester (viscosity 32.3 mm²/s at 100°C) for comparison.

Table 7 shows the results of evaluation as refrigerator oil when various types of ester oils are added to 1,1,1,2-tetrafluoroethane.

**Table 7**

| Specimen oil | Specimen oil 25 | Specimen oil 26 | Specimen oil 27 | Specimen oil 28 |
|---|---|---|---|---|
| Viscosity (mm²/s) at 100°C | 5.15 | 5.11 | 1.0 | 32.3 |

| Compatibility with refrigerant | | | | |
|---|---|---|---|---|
| Two-phase separation temperature at high temperature | 100°C | 95°C | 110°C or more | Separated at room temperature |
| . Oil component ratio 10 wt % | | | | |
| . Oil component ratio 3 wt % | 105°C | 100°C | 110°C or more | Separated at room temperature |
| Two-phase separation temperature at low temperature | -40°C or less | -40°C or less | -40°C or less | Separated at room temperature |
| . Oil component ratio 10 wt % | | | | |

| Hygroscopic property (moisture %) | | | | |
|---|---|---|---|---|
| 7 days | 0.04 | 0.09 | 0.02 | - |
| 14 days | 0.08 | 0.17 | 0.05 | - |
| 21 days | 0.13 | 0.27 | 0.10 | - |
| 28 days | 0.17 | 0.32 | 0.13 | - |
| Evaporation stability 140°C x 24 hr. Evaporation loss | Low | Low | High | Low |

From the above table, it is evident that the specimen oils 25 - 26 have high compatibility with refrigerant, low hydroscopic property and can be used as base oil (major component) for lubricant for a refrigerator. On the other hand, a specimen oil 27 having viscosity of less than 2 mm²/s has low thermal stability, while the specimen oil 28 having viscosity of 30 mm²/s or more has high thermal stability but low compatibility with refrigerant.

### Example 8

To the above specimen oil 25, polyalkyleneglycol having viscosity of 13.0 mm²/s (100°C) was added as polymer in varying quantity to prepare the specimen oils 29, 30 and 31. For each of the lubricating oils for refrigerator, the compatibility with refrigerant and hygroscopic property were tested.

The results are summarized in Table 8.

**Table 8**

| Specimen oil | Specimen oil 29 | Specimen oil 30 | Specimen oil 31 |
|---|---|---|---|
| Polymer added q'ty (wt %) | 25 | 50 | 75 |
| (*1) Viscosity after blending | 6.5 | 8.4 | 10.5 |

| Compatibility with refrigerant | | | |
|---|---|---|---|
| Two-phase separation temperature at high temperature | 85 | 76 | 66 |
| . Oil component ratio 10 wt % | | | |
| . Oil component ratio 3 wt % | 91 | 80 | 71 |
| Two-phase separation temperature at high temperature | -40°C | -40°C or less | -40°C or less |
| . Oil component ratio 10 wt % | | | |

| Hygroscopic property (moisture %) | | | |
|---|---|---|---|
| 7 days | 0.4 | 0.7 | 1.1 |
| 14 days | 0.5 | 0.9 | 1.2 |
| 21 days | 0.5 | 1.0 | 1.5 |
| 28 days | 0.7 | 1.2 | 1.6 |

| | | | |
|---|---|---|---|
| *1 mm²/S (100°C) | | | |

The above table shows that the specimen oils 29 - 31 have high compatibility with refrigerant and low hygroscopic property.

To the above specimen oil 26, sealed test tube was performed by the same procedure as in the Example 4, and the results similar to those of the Example 4 were obtained.

Next, exemplification is given of use of a branched carboxylic acid in esters for the lubricant for refrigerator.

### Example 9

The specimen oil 32 is obtained by reaction of pentaerythritol with 2-ethyl butyric acid in mol ratio of 1:4.

The specimen oil 33 is obtained by reaction of pentaerythritol with 2-ethyl hexanoic acid in mol ratio of 1:4.

The specimen oil 34 is obtained by reaction of pentaerythritol with isononanic acid in mol ratio of 1:4.

The results of the evaluation of lubricating oil for refrigerator are given in Table 9 when various types of ester oils are added to 1,1,1,2-tetrafluoroethane.

**Table 9**

| Specimen oil | | Specimen oil 32 | Specimen oil 33 | Specimen oil 34 | specimen oil 2 |
|---|---|---|---|---|---|
| Viscosity (mm²/s) at 100°C | | 4.4 | 6.1 | 11.3 | 3.8 |

| Compatibility with refrigerant | | | | | |
|---|---|---|---|---|---|
| Two-phase separation temperature at high temperature | | 80°C or more | 80°C or more | 80°C or more | 95°C or more |
| . Oil component ratio 10 wt % | | | | | |
| . Oil component ratio 3 wt % | | 80°C or more | 80°C or more | 80°C or more | 100°C |
| Two-phase separation temperature at high temperature | | -40°C or less | -15°C | -25°C | -20°C |
| . Oil component ratio 10 wt % | | | | | |

| Hygroscopic property (moisture %) | | | | | |
|---|---|---|---|---|---|
| 7 days | | 0.02 | 0.02 | 0.02 | 0.06 |
| 14 days | | 0.04 | 0.04 | 0.04 | 0.10 |
| 21 days | | 0.05 | 0.05 | 0.06 | 0.16 |
| 28 days | | 0.06 | 0.06 | 0.07 | 0.22 |
| Hydrolytic stability (Total acid number mg KOH/g) | Before test | 0.03 | 0.03 | 0.03 | 0.03 |
| | After test | 2.2 | 2.2 | 2.4 | 3.2 |

The above table shows that the specimen oils 32 - 34 have high compatibility with refrigerant, low hygroscopic property and high hydrolytic stability.

Hydrolytic stability was measured as follows: 250 ml of oil was placed in an iron container having inner volume of 350 ml. One piece each of aluminum and copper wires (8 mm in inner diameter and 30 mm in length) was placed in it as catalysts. Further, 1000 ppm of water was added, and 40 g of 1,1,1,2-tetrafluoroethane was added as refrigerant. After it was heated at 175°C for 20 days, oil was taken out, and total acid number was measured.

Next, the following example shows use of purified esters in the lubricant for refrigerator.

### Example 10

The specimen oil 35 is an ester obtained through the reaction of 1 mol of pentaerythritol with 4 mols of aliphatic C₅ - C₉ acid after contact processing by a zeolite.

The specimen oils 36 and 40 are esters obtained by reaction of 1 mol of dipentaerythritol with 6 mols of aliphatic C₅ - C₆ acid. The specimen oil 36 is obtained by further contact processing with a zeolite.

The specimen oils 37 and 41 are esters obtained by reaction of 1 mol of pentaerythritol with 4 mols of C₅ - C₆ fatty acid. The specimen oil 37 is obtained by further contact processing with zeolite.

The specimen oil 38 is obtained by adding 0.02 wt % of metal deactivator benzotriazole and 0.2 wt % of antioxidant diphenylamine to the specimen oil 35.

The specimen oil 39 is obtained by adding the same additives as those for the above specimen oil 38 to the specimen oil 36.

The specimen oil 42 is obtained by adding the same additives as those for the above specimen oil 38 to the specimen oil 40.

To these specimen oils, performance was evaluated by the following methods:

### Total acid number measuring method

Total acid number was determined by the neutralization number of JIS K 2501.

### Peroxide number measuring method

Iodine titration method was used, by which potassium iodide was added to the specimen and the isolated iodine was titrated. The peroxide number is expressed in milliequivalent to 1 kg of the specimen.

### Aldehyde number measuring method

Sodium hydroxide titration method was adopted by which hydroxylamine hydrochloride was added to the specimen and the isolated acid was titrated by sodium hydroxide.

### Bromine index measuring method

Bromine index was determined by ASTM D 1492.

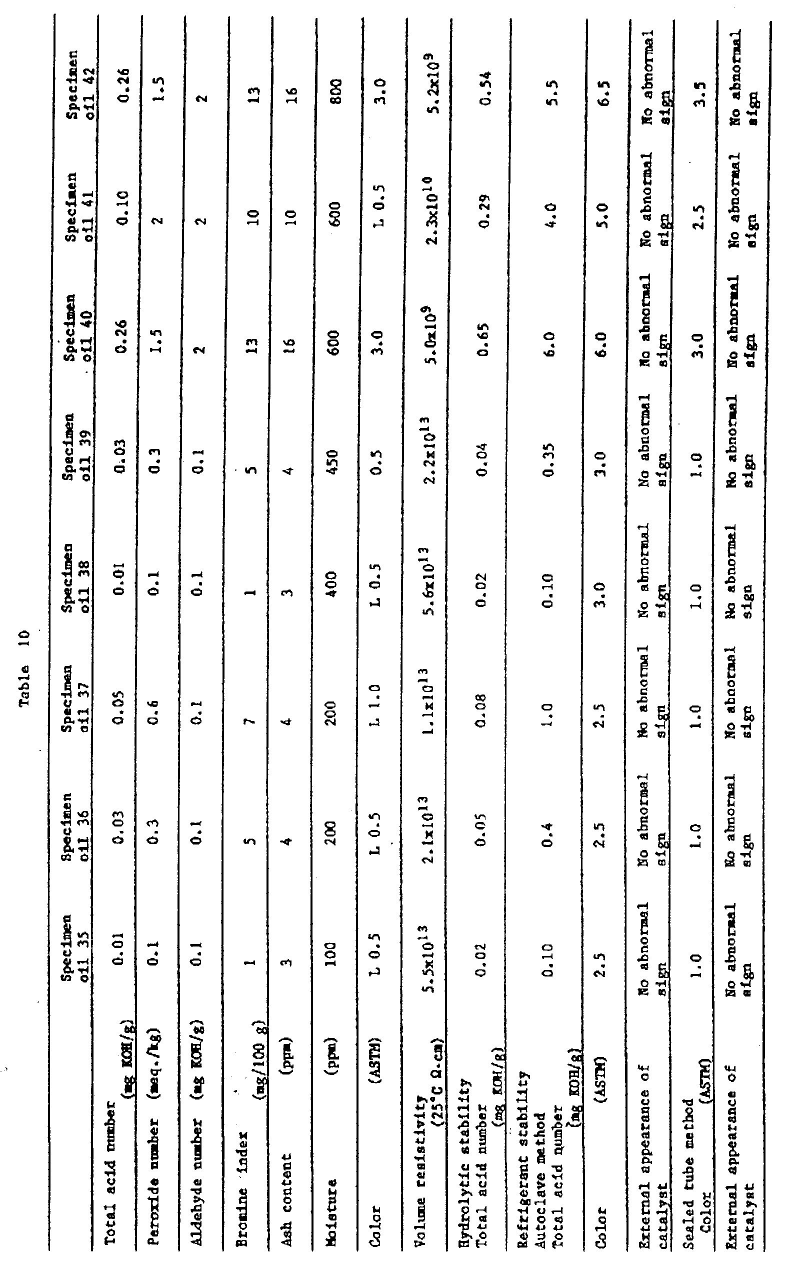

Thus, it is evident that the lubricating oils for refrigerator show less increase in total acid number, less change in hue after the test, keeping good external appearance of catalyst, and showing high hydrolytic stability, refrigerant stability and insulating property.

The effect of adding an anti-wear agent to lubricant for refrigerator of this invention was evaluated as follows.

### Method to evaluate anti-wear property

This was evaluated by a LFW-1 friction wear test in accordance with ASTM D 2981. To simulate the conditions in practical application, the test condition was set to oil temperature of 120°C, and the load was set to 20 Lbs based on the hardness of the aluminum material. Al-Sn alloy was used as test piece for aluminum material.
- Testing conditions
   Load 20 Lbs; oil temperature 120°C; number of revolutions 1000 rpm; test duration 60 minutes
- Test piece material
   - Ring: SAE 4620 steel H_{RC} = 60 (Hᵥ = 694)
   - Block: Al-Sn alloy Hᵥ = 49

### Example 11

On a lubricant for refrigerator comprising the following esters, the effect on friction wear of adding an antiwear agent was evaluated.

The results of the evaluation on the following specimen oils are summarized in Table 11, and the results of the evaluation on the comparative specimen oil are shown in Table 12.

For all specimen oils, mixed ester oil consisting of 10 wt % of the ester (viscosity 5.0 at 100°C) of pentaerythritol and aliphatic C₅ - C₉ acid and of 90 wt % of the ester (viscosity 10.0 at 100°C) of dipentaerythriol and aliphatic C₅ - C₆ acid was used as base oil.

The specimen oils 43 and 44 contain triphenyl phosphorothionate as anti-wear agent, the specimen oils 45 and 46 contain trialkyl-(C₁₂)-phosphorothionate as anti-wear agent, the comparative specimen oils 47 and 48 contain phsophorus type anti-wear agent tricresyl phosphate, the comparative specimen oil 49 contains phosphorous type anti-wear agent trioleyl phosphate, the comparative specimen oil 50 contains dilauryl hydrogenphosphate, and the comparative specimen oil 41 contains no anti-wear agent.

Dialkyldiphenylamine was used as antioxidant, succinic acid imide was used as corrosion inhibitor, and silicone was used as defoaming agent.

The added quantity of each additive is given in wt %.

**Table 11**

| | Specimen oil 43 | Specimen oil 44 | Specimen oil 45 | Specimen oil 46 |
|---|---|---|---|---|
| Anti-wear agent added q'ty | 0.3 | 0.5 | 0.3 | 0.6 |
| Antioxidant added q'ty | 0.4 | 0.4 | 0.4 | 0.4 |
| Corrosion inhibitor added q'ty | 0.12 | 0.12 | 0.12 | 0.12 |
| Defoaming agent added q'ty | 0.0005 | 0.0005 | 0.0005 | 0.0005 |
| Items of evaluation | 5 | 8 | 7 | 9 |
| Al wearing (mg) | | | | |

**Table 12**

| | Specimen oil 47 | Specimen oil 48 | Specimen oil 49 | Specimen oil 50 | Specimen oil 51 |
|---|---|---|---|---|---|
| Anti-wear agent added q'ty | 0.3 | 1.8 | 2.0 | 0.5 | -- |
| Antioxidant added q'ty | 0.4 | 0.4 | 0.4 | 0.4 | 0.4 |
| Corrosion inbibitor added q'ty | 0.12 | 0.12 | 0.12 | 0.12 | 0.12 |
| Defoaming agent added q'ty | 0.0005 | 0.0005 | 0.0005 | 0.0005 | 0.0005 |
| Items of evaluation | 16 | 24 | 36 | 22 | 18 |
| A1 wearing (mg) | | | | | |

As it is evident from the above tables, an excellent anti-wear effect is obtained when a sulfur type anti-wear agent is used (specimen oils 43 - 46), whereas the anti-wear effect is decreased even when compared with the specimen oil 51, to which no anti-wear agent is added, when a phosphorus type of anti-wear agent is used (specimen oils 47 - 50).

## Claims

1. A lubricant for mixing with 1,1,1,2-tetrafluoroethane refrigerant, which comprises an ester of viscosity of 100°C 2 - 30 mm²/s.

2. A lubricant according to Claim 1, wherein said ester is a diester of an aliphatic monohydric aliphatic dicarboxylic acid.

3. A lubricant according to Claim 1, wherein said ester is a diester of an aliphatic monohydric alcohol and an aromatic dicarboxylic acid.

4. A lubricant according to Claim 1, wherein said ester is an ester of an aliphatic polyhydric alcohol and an aliphatic monocarboxylic acid, or a partial ester of an aliphatic polyhydric alcohol and monocarboxylic acid, or a complex ester of an aliphatic polyhydric alcohol and a monocarhoxylic acid having 3 - 12 carbon atoms and an aliphatic dicarboxylic acid or aromatic dicarboxylic acid, aromatic tricarboxylic acid and aromatic tetracarboxylic acid.

5. A lubricant oil according to Claim 1, wherein said ester consists of an ester of a polyoxyalkylene glycol mono-ether of the formula (A): 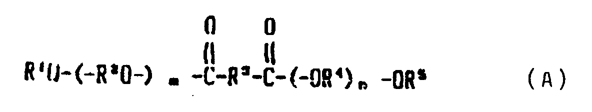 wherein R¹ and R⁵ each represents an alkyl group having 1 - 8 carbon atoms, which may be identical to or different from each other; R² and R⁴ each is an alkylene group having 2 - 6 carbon atoms, and R³ represents an alkylene group or aromatic ring having 2 - 13 carbon atoms and m and n each represents an integer 2 or more; and a carboxylic acid, or the ester consists of polyoxalkylene addition derivative of a trimethylolalkane, of the formula (B): 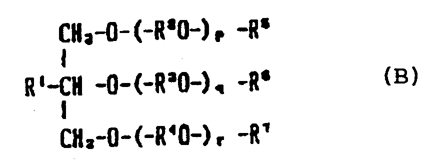 wherein R¹ is an alkyl group having 1 - 8 carbon atoms, R², R³ and R⁴ each is an alkylene group having 2 - 6 carbon atoms, R⁵, R⁶ and R⁷ each is an acyl group, and these may be identical to or different from each other; and p, q and r each represents an integer of 1 or more.

6. A lubricant according to any preceding claim, which comprises esters having different viscosities, which also contains a polymer selected from a polyester of polyalkylmethacrylate, polyalkylene glycol or neopentylglycol and aliphatic carboxylic acid.

7. A lubricant according to any preceding claim, which also includes a sulfur type of anti-wear agent.

8. A refrigerant composition which comprises 1,1,1,2-tetrafluoroethane and a lubricant as claimed in any preceding claim.
